Europäisches Patentamt

European Patent Office

Office européen des brevets

(11) Veröffentlichungsnummer: **0 413 895 A1**

# (12) EUROPÄISCHE PATENTANMELDUNG

(21) Anmeldenummer: 90105555.8

(22) Anmeldetag: 23.03.90

(51) Int. Cl.⁵: **F16J 15/32**

(30) Priorität: 19.08.89 DE 3927458
19.08.89 DE 3927457

(43) Veröffentlichungstag der Anmeldung:
**27.02.91 Patentblatt 91/09**

(84) Benannte Vertragsstaaten:
**DE ES FR GB IT SE**

(71) Anmelder: **GOETZE AG**
**Bürgermeister-Schmidt-Strasse 17**
**D-5093 Burscheid 1(DE)**

(72) Erfinder: **Deuring, Hans, Dipl.-Ing.**
**Im Eulenflug 29**
**D-5093 Burscheid(DE)**

(54) **Wellendichtring.**

(57) Die Erfindung betrifft einen Wellendichtring (1), bestehend aus einem Gehäuse (2, 2′, 2″) und einer polymeren Dichtscheibe (3). Die Dichtscheibe (3) weist einen trapezförmigen Querschnitt auf und ist durch einen unter einem spitzen Winkel $\alpha$ zur Wellendichtringachse a verlaufenden Einschnitt (8) in eine Schutz- und Dichtlippe (9, 10) gespalten. Der lichte Durchmesser der Dichtkanten (11, 12) der Schutz- und Dichtlippe (9, 10) entspricht dem Außendurchmesser der abzudichtenden Welle.

FIG. 1

## WELLENDICHTRING

Die Erfindung betrifft einen Wellendichtring, bestehend aus einem bevorzugt metallischen Gehäuse und einer polymeren Dichtscheibe mit einem am Gehäuse befestigten Haftteil und einem mit der abzudichtenden Welle korrespondierenden Dichtteil, wobei das Dichtteil durch einen am Innenumfang nach außen sich erstreckenden Einschnitt in eine Schutz- und Dichtlippe gespalten ist.

Aus der EP-PA 01 33 928 ist ein Wellendichtring der genannten Gattung zu entnehmen. Der Dichtmechanismus dieses Wellendichtringes beruht auf dem Flächenkontakt zwischen dem Dichtlippenteil und der Wellenoberfläche. Um eine sichere Abdichtung zu erzeugen, die auch bei höchsten auftretenden Temperaturen den Anforderungen gerecht wird, ist der Innendurchmesser der Dichtscheibe beziehungsweise der Schutz- und Dichtlippe kleiner als der Außendurchmesser der abzudichtenden Welle. Hierdurch ergibt sich eine sogenannte Oberdeckung zwischen den Bauteilen, was zur Folge hat, daß beim Einbau des Wellendichtringes die Schutz- und Dichtlippe umgebogen wird und der umgebogene Teil mit hoher Radialkraft auf der Welle liegt. Obwohl zur Abdichtung eine Radialkraft notwendig ist, bringt dies gleichzeitig eine Anzahl von Nachteilen mit sich.

Eine hohe Radialkraft erzeugt ein Bremsmoment auf der Welle, und die Welle muß zur Vermeidung übermäßigen Verschleißes kostenträchtig bearbeitet werden, indem die Wellenoberfläche zum Beispiel gehärtet werden muß. Anzustreben ist deshalb eine Dichtung, die zwar eine gewisse Radialkraft erzeugt, diese aber so gering wie möglich ist. Bei der bekannten Wellendichtung wurde deshalb auf der konvexen beziehungsweise auf der konkaven Seite der Dichtlippe eine konzentrische kreisförmige Nut angebracht, um so die Flexibilität der Dichtlippe zu erhöhen. Diese Maßnahme bedarf jedoch einer kostenintensiven Werkzeug- und Vorrichtungsaufwendung.

Der Erfindung liegt die Aufgabe zugrunde, einen gattungsgemäßen Wellendichtring im Hinblick auf seine Herstellung zu verbilligen, ohne die Lebensdauer und Abdichtgüte negativ zu beeinflussen.

Diese Aufgabe wird erfindungsgemäß dadurch gelöst, daß der Einschnitt, im Querschnitt gesehen, unter einem spitzen Winkel u zur Achse a des Wellendichtringes verläuft, dergestalt, daß die axiale Wandstärke der Dichtlippe vor der Montage mit radialem Abstand zur Wellenoberfläche abnimmt. Auf diese Weise kann mit nur einer Werkzeugeinstellung eine Dichtlippe mit hoher Flexibilität erzeugt werden. Damit ergibt sich eine rationelle, preiswerte Herstellung.

Einem weiteren Gedanken der Erfindung gemäß, weist die Dichtscheibe einen trapezförmigen Querschnitt auf und ist vorzugsweise, im Querschnitt gesehen, unter einem spitzen Winkel β zur Achse a des Wellendichtringes im Gehäuse befestigt. Durch diese besondere Geometrie und Anordnung liegt die Schutzlippe relativ flach zur Wellenoberfläche, so daß auch die Radialkraft der Schutzlippe gegenüber bekannten Ausführungen geringer ausfällt.

Des weiteren läßt sich die Radialkraft minimieren, ohne Einbußen bei der Abdichtgüte hinnehmen zu müssen, indem durch den Einschnitt an der Schutz- und Dichtlippe je eine Dichtkante gebildet ist, und daß der lichte Durchmesser der Dichtkanten dem Außendurchmesser der abzudichtenden Welle entspricht. Diese besondere Einschnittanordnung am Innenumfang der Dichtscheibe erzeugt je eine Dichtkante, die im Gegensatz zum Stand der Technik keine Überdeckung aufweist. Die zur Abdichtung notwendige Radialkraft entsteht erst beim Umbiegen der Dichtlippe. Je nach Anwendungsfall kann die Radialkraft variiert werden, indem beim mechanischen Herstellverfahren durch die Wahl von Dichtscheibendicke und Länge sowie von Einschnittiefe und Schnittwinkel die Flexibilität der Dichtlippe gesteuert wird.

Sollte gegebenenfalls eine hohe Radialkraft erforderlich sein, so besteht die Möglichkeit, auf der konkaven Seite der bogenförmigen Dichtlippe eine Ringzugfeder anzuordnen. Zur Lagefixierung auf der Dichtlippe stützt sich die Ringzugfeder axial an einem umlaufenden Radialschenkel des Gehäuses ab. Um ein Einlaufen in die Wellenoberfläche zu vermeiden, weist, einem weiteren Gedanken der Erfindung gemäß, der Radialschenkel eine axiale Verlängerung auf, die über eine Trennstelle, die als Sollbruchstelle ausgebildet ist, lösbar mit dem Radialschenkel verbunden ist. Hierdurch besteht einerseits die Möglichkeit, daß die axiale Verlängerung nach dem Lösen vom Radialschenkel den Laufring des Wellendichtringes bildet. Andererseits kann man bei Dichtscheiben aus PTFE-Material, die nach der Fertigstellung auf Spannelemente aufgezogen und bis zur Montage in diesem Zustand gelagert werden, auf die zusätzliche Herstellung von Spannelementen und deren Entsorgung verzichten.

Überdies entfällt das Härten der Wellenoberfläche, und die Dichtkanten können beim Montieren des Wellendichtringes oder bei der Lagerung nicht beschädigt werden. Um eine ausreichende Schmierung und Kühlung der Dichtkanten während des Betriebes sicherzustellen, sind im Radialschenkel des Gehäuses Durchbrüche vorgesehen.

Die Erfindung ist in der Zeichnung dargestellt und wird im folgenden näher erläutert. Es zeigen:

Figur 1 Querschnitt eines erfindungsgemäßen Wellendichtringes

Figur 2 Wellendichtring im eingebauten Zustand mit zusätzlicher Ringzugfeder

Figur 3 Wellendichtring mit Laufring

Figur 4 Ausschnittsvergrößerung gemäß Figur 3

Figur 5 Wellendichtring gemäß Figur 3 nach dem Einbau.

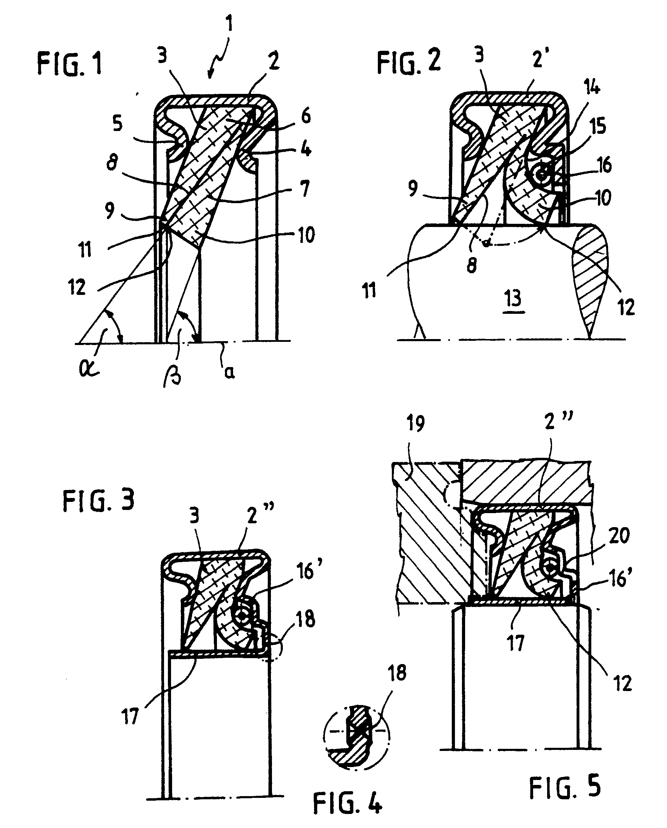

Die Figur 1 zeigt einen Wellendichtring 1, bestehend aus einem metallischen Gehäuse 2 und einer polymeren Dichtscheibe 3. Die Dichtscheibe ist zwischen zwei Schenkein 4, 5 eingeklemmt und weist einen trapezförmigen Querschnitt auf. Die Dichtscheibe 3 besteht ferner aus einem mit dem Gehäuse 2 verbundenen Haftteil 6 und einem mit einer Welle korrespondierenden Dichtteil 7, welches durch einen Einschnitt 8 in eine Schutzlippe 9 und eine Dichtlippe 10 gespalten ist. Erfindungsgemäß verläuft der Einschnitt 8 unter einem spitzen Winkel α zur Achse a des Wellendichtringes 1. Die Dichtscheibe 3 ist unter einem spitzen Winkel β zur Wellendichtringachse a in dem Gehäuse 2 festgelegt. Der Einschnitt 8 verläuft vom Innenumfang der Dichtscheibe 3, und zwar beginnend an der Stelle, die dem Außendurchmesser der abzudichtenden Welle entspricht. Das bedeutet, daß der lichte Durchmesser der durch den Einschnitt 8 gebildeten Dichtkanten 11, 12 an der Schutz- und Dichtlippe 9, 10 dem Außendurchmesser der Welle entspricht. Zwischen Dichtkante 11, 12 und Wellenoberfläche besteht somit keine Überdeckung. Im Einbauzustand entsteht durch Biegen der Dichtlippe 10 die zur Abdichtung notwendige Radialkraft.

In der Figur 2 ist eine Wellendichtung im eingebauten Zustand dargestellt. Durch die besondere geometrische Form und Anordnung der Dichtscheibe 3 innerhalb des Gehäuses 2' wird die Dichtlippe 10 beim Aufschieben auf die Welle 13 umgebogen, während die Schutzlippe 9, bedingt durch die Lage des Einschnittes 8, ihre ursprüngliche Position beibehält. Zur Radialkraftvergrößerung ist auf der konkaven Seite 14 der Dichtlippe 10 eine Ringzugfeder 15 angeordnet, welche sich ihrerseits an einem umlaufenden Radialschenkel 16' des Gehäuses 2' axial abstützt. Die Wandstärke der Schutzlippe 9 nimmt durch die Lage des Einschnittes 8 proportional zur Abnahme der Wandstärke der Dichtlippe 10 zu. Da darüber hinaus keine Überdeckung zur Welle 13 vorhanden ist, ist die relativ verformungssteife Schutzlippe 9 in der Lage, Schmutz von der Dichtlippe 10 fernzuhalten.

Die Figur 3 zeigt eine weitere Ausführungsform eines erf indungsgemäßen Wellendichtringes. Am Radialschenkel 16" des Gehäuses 2" ist eine axiale Verlängerung 17 angeordnet, die bis zur Montage des Wellendichtringes über eine Sollbruchstelle 18 (Figur 4) mit dem Gehäuse 2" verbunden ist. Während des Versandes oder der Lagerung dient die Verlängerung 17 als Schutzhülse der Dichtscheibe 3. Unmittelbar vor oder auch während des Einbaues des Wellendichtringes kann die Verbindung zwischen Radialschenkel 16' und Verlängerung gelöst werden.

Figur 5 zeigt einen Wellendichtring gemäß Figur 3 im eingebauten Zustand. Mittels eines Montagewerkzeuges 19 wird die Wellendichtung auf die Welle geschoben. Die während der Montage als Schutzhülse fungierende axiale Verlängerung 17 wurde vom Radialschenkel 16' gelöst und bildet nunmehr den Laufring des Wellendichtringes. Zur Schmierung und Kühlung der Dichtkante 12 sind im Radialschenkel 16' über den Umfang verteilt Durchbrüche 20 vorgesehen.

**Ansprüche**

1. Wellendichtring, bestehend aus einem bevorzugt metallischen Gehäuse und einer polymeren Dichtscheibe mit einem am Gehäuse befestigten Haftteil und einem mit der abzudichtenden Welle korrespondierenden Dichtteil, wobei das Dichtteil durch einen sich radial in Umfangsrichtung erstreckenden Einschnitt in eine Schutz- und Dichtlippe gespalten ist, dadurch gekennzeichnet, daß der Einschnitt (8), im Querschnitt gesehen, unter einem spitzen Winkel α zur Achse a des Wellendichtringes (1) verläuft, dergestalt, daß die axiale Wandstärke der Dichtlippe (10) vor der Montage mit radialem Abstand zur Wellenoberfläche abnimmt.

2. Wellendichtring nach Anspruch 1, dadurch gekennzeichnet, daß die Dichtscheibe (3) einen trapezförmigen Querschnitt aufweist.

3. Wellendichtring nach den Ansprüchen 1 und 2, dadurch gekennzeichnet, daß die Dichtscheibe (3), im Querschnitt gesehen, unter einem spitzen Winkel β zur Achse a des Wellendichtringes (1) im Gehäuse (2, 2', 2") befestigt ist.

4. Wellendichtring nach den Ansprüchen 1 bis 3, dadurch gekennzeichnet, daß durch den Einschnitt (8) an der Schutz- und Dichtlippe (9, 10) je eine Dichtkante (11, 12) gebildet ist, und daß der lichte Durchmesser der Dichtkanten (11, 12) dem Außendurchmesser der abzudichtenden Welle (13) entspricht.

5. Wellendichtring nach den Ansprüchen 1 bis 4, dadurch gekennzeichnet, daß die Dichtlippe (10) nach dem Einbau des Wellendichtringes (1) einen bogenförmigen Querschnitt aufweist, und daß auf der konkaven Dichtlippenseite (14) eine Ringzugfeder (15) angeordnet ist.

6. Wellendichtring nach den ansprüchen 1 bis 5, dadurch gekennzeichnet, daß die Ringzugfeder (15) sich axial an einem in Umfangsrichtung umlaufenden Radialschenkel (16, 16') des Gehäuses (2', 2") abstützt.

7. Wellendichtring nach den Ansprüchen 1 bis 6, dadurch gekennzeichnet, daß der Radialschenkel (16') eine axiale Verlängerung (17) aufweist, die über eine Trennstelle, die als Sollbruchstelle (18) ausgebildet ist, lösbar mit dem Radialschenkel (16') verbunden ist.

8. Wellendichtring nach den Ansprüchen 1 bis 7, dadurch gekennzeichnet, daß die axiale Verlängerung (17) nach dem Lösen vom Radialschenkel (16') den Laufring des Wellendichtringes bildet.

9. Wellendichtring nach den Ansprüchen 1 bis 8, dadurch gekennzeichnet, daß im Radialschenkel (16') des Gehäuses (2") Durchbrüche (20) vorgesehen sind.

FIG. 1

1
3
2
5
6
8
4
9
7
11
10
12

α
β
a

FIG. 2

3
2'
14
15
9
16
10
11
8
13
12

FIG. 3

3
2''
16'
18
17

FIG. 4

18

19
2''
20
16'
17
12

FIG. 5

Europäisches
Patentamt

# EUROPÄISCHER
# RECHERCHENBERICHT

Nummer der Anmeldung

## EP 90 10 5555

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 612 420 (KACO GMBH + CO)<br>* Zusammenfassung; Figuren 3-4 * | 1,3-6 | F 16 J 15/32 |
| A | DE-C-3 204 193 (FREUDENBERG)<br>* Zusammenfassung; Figur 7 * | 1-4 | |
| A,D | EP-A-0 133 928 (ELRING DICHTUNGWERKE)<br>* Zusammenfassung; Figur 3 * | 1 | |
| A | US-A-2 405 120 (EVANS)<br>* Anspruch 1; Figuren 1, 3 * | 7 | |

| | | |
|---|---|---|
| | | RECHERCHIERTE SACHGEBIETE (Int. Cl.5) |
| | | F 16 J |

Der vorliegende Recherchenbericht wurde für alle Patentansprüche erstellt

| Recherchenort | Abschlußdatum der Recherche | Prüfer |
|---|---|---|
| Den Haag | 30 Oktober 90 | NARMINIO A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument